# EUROPEAN PATENT SPECIFICATION

(11) **EP 0 399 559 B1**
(45) Date of publication and mention of the grant of the patent: **25.08.1993**
(21) Application number: 90109996.0
(22) Date of filing: 25.05.1990
(51) Int. Cl.: B60G 15/06, F16F 9/32

(54) **Process for assembling a spring plate-shock absorber rod subassembly forming part of an automotive shock absorber-spring assembly**
Verfahren zum Zusammensetzen einer Baugruppe, bestehend aus Federteller und Stossdämpferstange in einem Kraftfahrzeugfederbein
Méthode pour l'assemblage d'un ensemble à coupelle de ressort et tige d'amortisseur formant partie d'une unité de suspension à ressort et amortisseur pour véhicule

(30) Priority: 26.05.1989 IT 6740589
(43) Date of publication of application: 28.11.1990
(73) Proprietor: FIAT AUTO S.p.A., 10135 Torino (IT)
(72) Inventor: Gandiglio, Romolo, I-14019 Villanova d'Asti (IT); Rabino, Edoardo, I-10135 Torino (IT); Ravizza, Renato, I-10024 Moncalieri (IT)
(74) Representative: Boggio, Luigi

(56) References cited:
- EP-A- 0 108 041
- EP-A- 0 332 915
- DE-U- 1 973 261

## Description

The present invention relates to a process for integrally assembling a spring plate-shock absorber rod subassembly forming part of a shock absorber-spring assembly employed on vehicle suspensions.

Preassembled parts are widely used in the automotive industry for facilitating final assembly of the vehicle. One of these is the shock absorber-spring assembly which, on one side, is fitted directly to the vehicle wheel and, on the other, is coupled to the rest of the suspension. On known shock absorber-spring assemblies, however, the component parts, particularly the shock absorber rod and spring plate, are assembled exclusively using mechanical connecting means, such as threaded elements, screws, retaining rings, etc. see e.g. DE-U-1973261. This results, on the one hand, in a complex assembly process, considerable weight of the finished assembly and numerous mechanical machining operations purely for assembly purposes, and, on the other, in the impossibility of employing automatic assembly techniques. Moreover, with the exception of the laser welding technique, which involves very little thermal dispersion, any attempt to weld the spring plate directly to the shock absorber, which must be finish machined at the time of assembly, would result in overheating and consequently permanent damage of the components.

The aim of the present invention is to provide a process enabling straightforward, reliable assembly, with no need for mechanical connecting means, of a spring plate and shock absorber rod forming part of a shock absorber-spring assembly, thus enabling automatic assembly of the latter.

With this aim in view, according to the present invention, there is provided a process for assembling the spring plate of a shock absorber-spring assembly to the shock absorber rod, comprising stages consisting in:
- fitting said spring plate on to said shock absorber rod, in such a manner as to contact an axial shoulder formed in a predetermined position on said rod;
- securing said plate to said rod by means of a first continuous radial weld bead produced by focusing a laser beam on to respective adjacent portions of said plate and said rod and, at the same time, applying predetermined pressure for pressing said plate against said axial shoulder on said rod;
- fitting a bush coaxially on to an end portion of said rod projecting from said plate and opposite said axial shoulder;
- laterally securing said bush to said rod by means of a second and third continuous radial weld bead produced by focusing a laser beam on to respective adjacent portions of said bush and said rod and, at the same time, pressing the bottom end of said bush against said plate.

A non-limiting embodiment of the present invention will be described by way of example with reference to the accompanying drawings, in which:
Fig.1 shows a schematic view of a first type of shock absorber-spring assembly formed using the process according to the present invention;
Fig.2 shows a second type of shock absorber-spring assembly formed using the process according to the present invention.

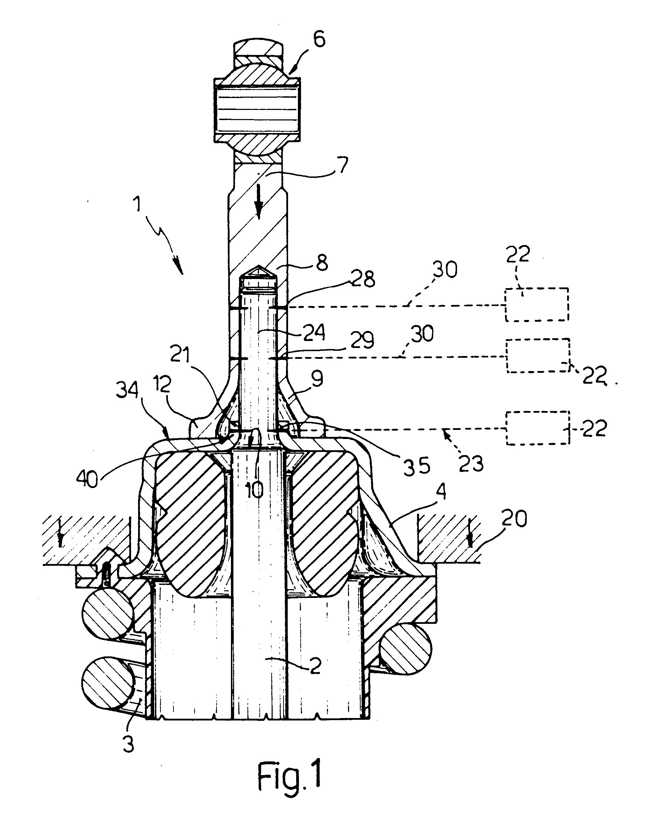

Number 1 in Fig.1 indicates the top of an otherwise known shock absorber-spring assembly comprising a rod 2 forming part of a known shock absorber (the rest not shown) having, close to its base, a known supporting element for a known helical spring 3 mounted coaxially and in known manner on to said shock absorber and contacting, at the top, a known plate 4 secured integral with rod 2. Rod 2 is also fitted with a known, e.g. articulated, coupling 6 for connecting the shock absorber-spring assembly to the vehicle suspension. According to the present invention, said coupling 6 is formed integral with the top end 7 of a bush 8 completing and constituting an extension of rod 2. Opposite end 7, bush 8 also presents a flared bottom end 9 having a peripheral flange 12 whereby to grip plate 4 against an axial shoulder 10 formed on rod 2.

The known part (not shown) of said shock absorber-spring assembly is assembled in known manner, e.g. by simply fitting spring 3 coaxially on to the shock absorber of which rod 2 forms part, so as to contact the bottom supporting element welded, for example, to the shock absorber casing. According to the present invention, plate 4 is then secured to rod 2, both finished dimensionally and in terms of surface finish, as follows.

Plate 4 is first fitted on to rod 2 so as to contact shoulder 10, which is formed in such an axial position as to compress spring 3 as required. This may be done by holding the shock absorber and pressing plate 4 on to rod 2 using an annular punch 20. Plate 4 is then secured by means of a first continuous annular weld bead 21 which joins plate 4 radially and thickness-wise to rod 2. According to the present invention, said bead 21 is produced by focusing, e.g. by means of a known laser head 22, an appropriately powerful laser beam 23 on to respective adjacent portions of plate 4 and rod 2 and, at the same time, applying predetermined pressure on plate 4 in the direction of the arrows (Fig.1) so as to press it against axial shoulder 10. This may be done using punch 20, and by gripping rod 2, e.g. using a pair of pliers (not shown), by top end 24 projecting through plate 4.

Assembly of plate 4 to rod 2 is then completed indirectly by fitting bush 8 coaxially on to end portion 24 of rod 2, and laterally securing bush 8 to rod 2 by means of a second and third continuous radial weld bead 28, 29 formed adjacent and parallel to each other by focusing a respective laser beam 30 on to respective adjacent portions of bush 8 and rod 2, e.g. again using head 22 moved into different parallel positions. In this case too, according to the present invention, alongside and throughout the above two laser welding operations, predetermined axial pressure is exerted on the parts being welded. In particular, bottom end 9 of bush 8 is pressed, in the direction of the arrow (Fig.1), against the top front surface 34 of plate 4, so as to maintain contact between said surface 34 and flange 12.

In the Fig.1 example, plate 4 presents a central cylindrical collar 35, which is fitted coaxially on to rod 2 and so shaped as to mate with shoulder 10 defined by a curved surface. Bead 21 is formed on collar 35 so as to be substantially perpendicular to the longitudinal axis of rod 2, and so that said adjacent portions of plate 4 and rod 2 on which said bead 21 is formed are in fact collar 35 and curved shoulder 10. According to a further characteristic of the present invention, said adjacent portions of plate 4 and rod 2 are defined by respective surfaces 40 which, at the assembly stage, are exposed to laser beam 23 and illuminated prior to welding. Similarly, the adjacent portions of bush 8 and rod 2 welded by beads 28 and 29 are the central portion of bush 8 and said end portion 24 of rod 2. Beads 28 and 29 are also formed perpendicular to rod 2 and, in this case too, the surfaces defining said portions connected by beads 28 and 29 are illuminated prior to welding.

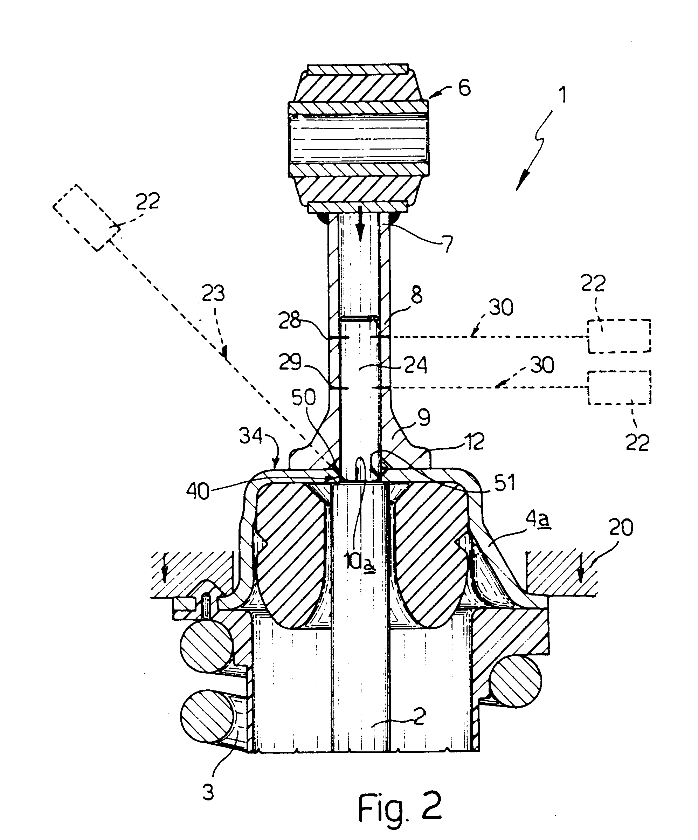

In the Fig.2 example, in which any details similar or identical to those already described are indicated using the same numbering system, a plate 4a is fitted on to rod 2 through a central hole 51 at which said first laser weld bead 50 is formed. According to this variation, weld bead 50, produced by head 22 focusing laser beam 23 on to surfaces 40 of adjacent portions of plate 4a and rod 2 defined by hole 51 and an axial step shoulder 10a, is arranged obliquely, i.e. converges downwards, in relation to rod 2, through the entire thickness of plate 4a, so as to weld plate 4a and rod 2 as far as axial shoulder 10a. In this case too, assembly of plate 4a to rod 2 is completed by bush 8, which is held against surface 34 by means of weld beads 28 and 29 identical to and formed in the same way as those of the Fig.1 embodiment.

Mechanical tests performed on shock absorber-spring assemblies formed according to the present invention have shown excellent static and fatigue resistance, particularly as regards the plate 4/rod 2 joint. This is believed to be the combined result of the design of the top portion of the shock absorber-spring assembly (rod 2, bush 8, plate 4), the specific design of certain components (particularly bush 8), the location of the weld beads and the manner in which the same are formed. In particular, the axial pressure exerted on the mating components, on the one hand, probably contributes towards connection of the same, and, on the other, induces post-welding constraints enabling redistribution of the work loads.

The advantages of the process according to the present invention will be clear from the foregoing description. In particular, it provides for producing shock absorber-spring assemblies featuring fairly straightforward, low-cost components; connection may be made by means of laser welding, thus preventing damage to the parts, which may be assembled machined to final dimensions; all the assembly operations involved are straightforward and, therefore, easily automated; and the finished assemblies are both reliable and lightweight.

## Claims

1. A process for assembling the spring plate (4) of a shock absorber-spring assembly to the shock absorber rod (2), comprising stages consisting in:
- fitting said spring plate on to said shock absorber rod, in such a manner as to contact an axial shoulder (10) formed in a predetermined position on said rod;
- securing said plate to said rod by means of a first continuous radial weld bead (21,50) produced by focusing a laser beam (23) on to respective adjacent portions of said plate and said rod and, at the same time, applying predetermined pressure for pressing said plate against said axial shoulder on said rod;
- fitting a bush (8) coaxially on to an end portion of said rod projecting from said plate and opposite said axial shoulder;
- laterally securing said bush to said rod by means of a second and third continuous radial weld bead (28,29) produced by focusing a laser beam (30) on to respective adjacent portions of said bush and said rod and, at the same time, pressing the bottom end of said bush against said plate.

2. A process as claimed in Claim 1, characterised by the fact that said bottom end (9) of said bush is flared, and presents a peripheral flange (12) designed to contact the top front surface of said plate; said bush also presenting an articulated coupling (6) on the top end (7) opposite said bottom end.

3. A process as claimed in Claim 1 or 2, characterised by the fact that said adjacent portions of said bush (8) and rod (2) and said plate (4) and rod present respective surfaces exposed to said laser beam and which are illuminated prior to welding.

4. A process as claimed in any one of the foregoing Claims, characterised by the fact that said plate presents a cylindrical collar (35) fitted coaxially on to said rod and secured to the same by means of said first laser weld bead (21); said bead being formed on said collar and substantially perpendicular to said rod.

5. A process as claimed in any one of the foregoing Claims from 1 to 3, characterised by the fact that said plate is fitted on to said rod through a central through hole (51), at which said first laser weld bead (50) is formed; said bead being arranged obliquely and converging downwards in relation to said rod, so as to weld said plate to said rod as far as said axial shoulder on the same.

## Patentansprüche

1. Verfahren zum Zusammenbau des Federtellers (4) eines Federbeines mit der Stoßdämpferstange (2), umfassend Schritte bestehend aus:
- Aufschieben des Federtellers (4) auf die Stoßdämpferstange (2), so daß dieser die an einer festgelegten Position an der Stange (2) gebildete axiale Schulter (10) berührt;
- Befestigen des Federtellers (4) an der Stoßdämpferstange (2) mittels einer ersten ununterbrochenen radialen Schweißraupe (21, 50), welche durch Fokussierung eines Laserstrahls (23) auf jeweils angrenzende Abschnitte des Federtellers (4) und der Stoßdämpferstange (2) erzeugt wird, und durch gleichzeitiges Anlegen eines vorbestimmten Druckes zum Andrücken des Federtellers (4) gegen die axiale Schulter (10) an der Stoßdämpferstange (2);
- konzentrisches Aufschieben einer Hülse (8) auf einen gegenüber der axialen Schulter (10) liegenden Endabschnitt (24) der Stoßdämpferstange (2), welcher den Federteller (4) überragt;
- seitliches Befestigen der Hülse (8) an der Stoßdämpferstange (2) mittels einer zweiten und dritten ununterbrochenen radialen Schweißraupe (28, 29), welche durch Fokussierung eines Laserstrahles (30) auf jeweils angrenzende Abschnitte der Hülse (8) und der Stoßdämpferstange (2) erzeugt wird, und durch gleichzeitiges Andrücken des unteren Endes (9) der Hülse (8) gegen den Federteller (4).

2. Verfahren nach Anspruch 1, dadurch gekennzeichnet, daß das untere Ende (9) der Hülse (8) konisch erweitert ist und einen am Umfang verlaufenden Flansch (12) aufweist, welcher zur Anlage an der äußeren Oberfläche (34) des Federtellers (4) gestaltet ist, und daß die Hülse (8) ein gelenkiges Anschlußstück (6) am oberen Ende (7) gegenüber Fußende (9) aufweist.

3. Verfahren nach Anspruch 1 oder 2, dadurch gekennzeichnet, daß die angrenzenden Abschnitte der Hülse (8) mit der Stoßdämpferstange (2) und des Federtellers (4) mit der Stoßdämpferstange (2) jeweils Oberflächen (40) aufweisen, welche dem Laserstrahl (23, 30) ausgesetzt werden, und welche vor dem Verschweißen bestrahlt werden.

4. Verfahren nach einem der vorhergehenden Ansprüche, dadurch gekennzeichnet, daß der Federteller (4) einen zylindrischen Kragen (35) aufweist und konzentrisch auf die Stoßdämpferstange (2) aufgeschoben wird und mittels der ersten Laserschweißraupe (21) an der Stoßdämpferstange (2) befestigt wird, wobei die Schweißraupe (21) auf dem Kragen (35) und im wesentlichen senkrecht zur Stoßdämpferstange (2) hergestellt wird.

5. Verfahren nach einem der vorhergehenden Ansprüche 1 bis 3, dadurch gekennzeichnet, daß der Federteller (4) durch ein zentrales Loch (51), an welchem die erste Laserschweißraupe (50) gebildet wird, auf die Stoßdämpferstange (2) geschoben wird, wobei die Schweißraupe (50) in bezug zur Stoßdämpferstange (2) schräg und nach unten zusammenlaufend angeordnet ist, um so den Federteller (4) mit der Stoßdämpferstange (2) bis zur axialen Schulter (10a) zu verschweißen.

## Revendications

1. Procédé pour assembler la coupelle de ressort (4) d'un ensemble de ressort et d'amortisseur sur la tige (2) de l'amortisseur, comprenant les étapes suivantes :
- introduire la coupelle de ressort sur la tige de l'amortisseur de manière à entrer en contact avec un épaulement axial (10) formé dans une position prédéterminée sur cette tige;
- fixer la coupelle sur la tige au moyen d'un premier cordon de soudure radial continu (21,50) produit en concentrant un rayon laser (23) sur des portions adjacentes respectives de la coupelle et de la tige et en appliquant simultanément une pression prédéterminée pour presser la coupelle contre l'épaulement axial sur la tige;
- monter un manchon (8) coaxialement sur une portion terminale de la tige se projetant de la coupelle et à l'opposé de cet épaulement axial;
- fixer latéralement le manchon sur la tige au moyen d'un deuxième et d'un troisième cordon de soudure radial continu (28,29), ces cordons étant produits en concentrant un rayon laser (30) sur des portions adjacentes respectives du manchon et de la tige, et en pressant simultanément l'extrémité inférieure du manchon contre la coupelle.

2. Procédé selon la revendication 1, caractérisé en ce que l'extrémité inférieure (9) du manchon est évasée et présente un rebord périphérique (12) conçu pour venir en contact avec la surface frontale supérieure de la coupelle, ce manchon présentant également un raccord articulé (6) sur l'extrémité supérieure opposée à l'extrémité inférieure.

3. Procédé selon la revendication 1 ou la revendication 2, caractérisé en ce que les portions adjacentes du manchon (8) et de la tige (2) et de la coupelle (4) et de la tige présentent des surfaces respectives exposées aux rayons laser qui sont éclairées avant soudage.

4. Procédé selon l'une quelconque des revendications précédentes, caractérisé en ce que la coupelle présente une collerette cylindrique (35) montée coaxialement sur la tige et fixée à celle-ci au moyen du premier cordon de soudure laser (21), ce cordon étant formé sur la collerette et étant pratiquement perpendiculaire à la tige.

5. Procédé selon l'une des revendications 1 à 3 précédentes, caractérisé en ce que la coupelle est fixée sur la tige par l'intermédiaire d'un trou traversant central (51), au niveau duquel est formé le premier cordon de soudure laser (50), ce cordon étant disposé en oblique et convergeant vers le bas par rapport à la tige, de façon à souder la coupelle sur la tige aussi loin que l'épaulement axial sur celle-ci.
